# FASCICULE DE BREVET EUROPEEN

(11) **EP 2 936 784 B1**
(45) Date de publication et mention de la délivrance du brevet: **16.06.2021**
(21) Numéro de dépôt: 13824613.7
(22) Date de dépôt: 20.12.2013
(51) Int. Cl.: H04L 29/08

(54) **MÉCANISME DE GESTION D'UNE SESSION DE COMMUNICATION**
MECHANISMUS ZUR VERWALTUNG EINER KOMMUNIKATIONSSITZUNG
MECHANISM FOR MANAGING A COMMUNICATION SESSION

(30) Priorité: 20.12.2012 FR 1262440
(43) Date de publication de la demande: 28.10.2015
(73) Titulaire: ORANGE, 75015 Paris (FR)
(72) Inventeur: FONTAINE, Fabrice, F-35850 Geveze (FR); BARANSKI, Fabrice, F-35135 Chantepie (FR)
(86) Numéro de dépôt international: PCT/FR2013/053233
(87) Numéro de publication internationale: WO 2014/096742

(56) Documents cités:
- WO-A1-2009/055802
- US-A1- 2006 123 119
- US-A1- 2006 184 535
- US-A1- 2010 323 728
- US-A1- 2012 120 858
- US-A1- 2012 179 934

## Description

### Domaine technique

L'invention se rapporte au domaine général des réseaux de télécommunication et plus particulièrement aux communications entre un terminal client et un équipement serveur sur un réseau de télécommunications de type Internet.

### Etat de la technique

De façon connue, dans un réseau de type Internet, une communication entre un terminal client et un équipement serveur s'effectue au moyen du protocole HTTP (de l'anglais *HyperText Transfer Protocol*), un protocole de communication client-serveur développé en particulier pour *le World Wide Web* (Web). Les clients HTTP les plus connus sont les navigateurs Web offrant des applications conçues pour être accédées à distance ; le langage *HyperText Markup Language,* généralement abrégé HTML, est un format de données conçu pour représenter les pages Web de telles applications.

Les premières versions du protocole HTML n'autorisaient pas de communication bidirectionnelle entre le client et le serveur. Le client devait se connecter au serveur via un mécanisme de requêtes et réponses, aussi appelé *polling,* en utilisant le protocole HTTP. Pour assurer des communications bidirectionnelles entre le client et le serveur, le protocole *websocket* a été introduit plus récemment. *WebSocket* est un standard désignant à la fois un protocole réseau et une interface de programmation qui peut être utilisée par une application sur n'importe quel client et serveur Web. Le protocole a été normalisé par l'organisme IETF (*Internet Engineering Task Force*) dans sa spécification RFC 6455 (de référence IETF *Request for Comments* : 6455) et l'interface de programmation correspondante est en cours de normalisation par l'organisme W3C (de référence : *The Web Sockets API; W3C Working Draft*)*.*

*Websocket* améliore considérablement la communication entre le serveur et le client, mais impose au client de maintenir la session de communication Websocket, et donc la liaison internet active, afin de pouvoir communiquer à tout moment avec le serveur. Le maintien de cette liaison peut être inutilement coûteux. En effet, un terminal consomme de l'énergie lorsque sa liaison Internet est activée et que des données sont échangées. Il est possible, sur certains équipements, notamment les appareils mobiles (*smartphones*), de couper, ou déconnecter la liaison Internet, lorsqu'il n'est pas nécessaire de l'utiliser. La déconnexion de la liaison Internet permet de diminuer la consommation d'énergie du terminal mais interdit toute communication. Pour diminuer la consommation d'énergie, il est également possible d'arrêter seulement l'application *websocket,* afin de ne plus recevoir ou émettre des données de ce type. Mais le terminal, dans ce cas, perd la session en cours et doit établir une nouvelle session *websocket* s'il souhaite communiquer avec le serveur par la suite.

L'invention offre une solution ne présentant pas les inconvénients de l'état de la technique. WO2009055802 présente une méthode et un système d'établissement de session sécurisée utilisant le cryptage basé sur l'identité (VDTLS). US2006184535 divulgue une méthode par laquelle une session établie pour une application est suspendue d'une instance et reprise plus tard sur le serveur ou un autre serveur. US2012179934 divulgue une méthode permettant d'étendre les sessions de communication de données du réseau de la couche application pour les applications de programmes informatiques qui utilisent un protocole de transport fiable. US2012120858 divulgue des dispositifs et des méthodes pour faciliter la conservation de l'énergie dans un terminal client sans fil en mode connecté et en mode surveillance en utilisant un dispositif proxy pour surveiller un indicateur de reprise de données du réseau pour le terminal client.

### L'invention

Les éléments constitutifs de l'invention sont décrits dans les revendications indépendantes. D'autres aspects de l'invention sont décrits dans les revendications dépendantes.

L'invention sera mieux comprise à la lecture de la description qui suit, donnée à titre d'exemple et faite en référence aux dessins annexés.

### Les figures:

La figure 1 représente le contexte général d'une mise en œuvre de l'invention.
La figure 2 représente une architecture d'une passerelle domestique implémentant un mode de réalisation de l'invention.
La figure 3 représente un chronogramme des échanges entre les différents équipements lors d'une mise en œuvre de l'invention.

### Description détaillée d'un exemple de réalisation illustrant l'invention

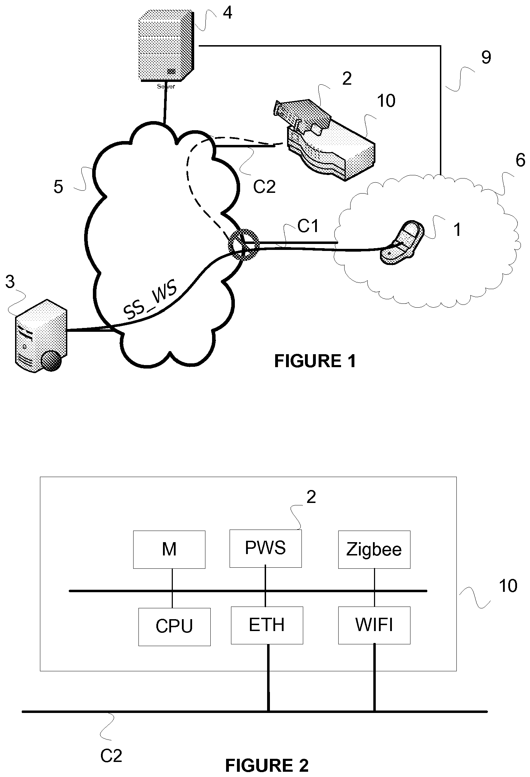

La figure 1 représente le contexte général d'une mise en œuvre de l'invention.

Un serveur d'applications (3) est connecté au réseau Internet (5). La communication entre le serveur (3) et un terminal client (1) s'effectue via le réseau Internet au moyen du protocole HTTP. Des pages Web sont par exemple présentées au terminal client au format HTML, format de données conçu pour représenter de telles pages.

Le terminal client (1) dispose d'un client Web ; une page applicative est typiquement présentée sur le terminal (1) au moyen d'un navigateur Web. Le serveur (3) offre des applications de type Web nécessitant un transfert de données entre le serveur et un terminal en mode bidirectionnel, par exemple une application de consultation météorologique, ou de messagerie instantanée, dont les pages sont destinées à être présentées sur le terminal au moyen d'un tel navigateur. Le serveur d'applications envoie régulièrement des données vers le terminal, par exemple des notifications lors de l'arrivée de nouveaux messages.

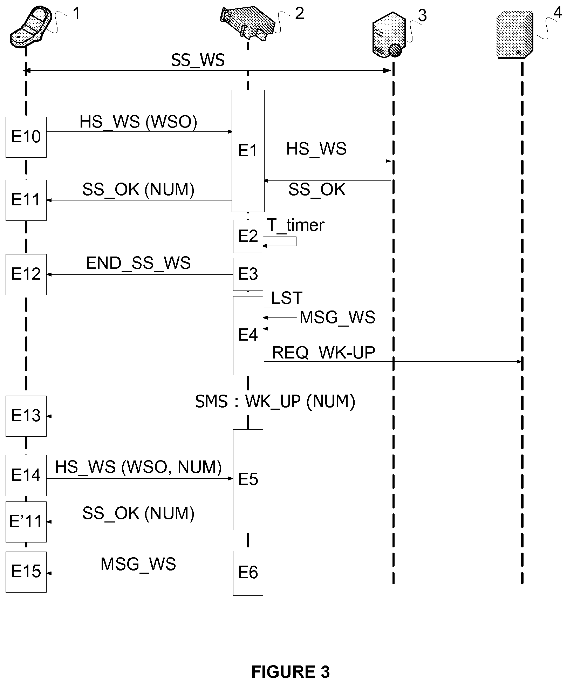

Le terminal client (1) est dans cet exemple un téléphone mobile auquel sont associées des fonctions informatiques et de navigation Internet, en anglais *smartphone,* apte à communiquer avec le serveur, mais pourrait être également un ordinateur portable, une tablette informatique, etc. Dans la suite, on entend par terminal client, ou plus simplement terminal, tout dispositif apte à se connecter à un serveur Web (3) via un canal de communication et à communiquer avec ce serveur en mode duplex, aussi appelé bidirectionnel, c'est-à-dire qui autorise l'échange de messages applicatifs dans les deux sens. Comme introduit préalablement, le protocole *websocket* définit un mécanisme de communication bidirectionnelle entre un client et un serveur sur le Web. Dans le mode de réalisation choisi, les messages sont de type *websocket* et sont échangés au cours d'une session de communication *websocket,* plus simplement appelée session *websocket* et abrégée en SS_WS sur la figure 1 et la figure 3.

Le terminal client (1) se trouve dans un réseau (6), par exemple un réseau mobile. Plus largement, le réseau (6) pourrait être de n'importe quel type (cellulaire, GSM - *Global System for Mobile Communications,* UMTS - *Universal Mobile Télécommunications System,* Wifi - *Wireless,* etc) sans sortir du cadre de l'invention, du moment que le terminal (1) est apte à communiquer avec le serveur (3) via un protocole bidirectionnel, notamment *websocket.* Selon un autre exemple de réalisation, le terminal (1) pourrait également être connecté directement au réseau Internet (5) en mode filaire.

Un serveur (4) est également connecté à l'Internet. Ce serveur émet des données vers les terminaux (1) du réseau mobile (6); ce serveur, parfois appelé serveur de notifications, est par exemple un serveur de notifications de messages de type Zigbee, ou encore de type SMSC (sigle pour *Short Message Service Center*), c'est-à-dire qu'il permet dans ce dernier cas de gérer le transfert de messages SMS (en mode texte ou binaire) vers les téléphones mobiles, via un lien (9) établi entre le serveur et le réseau mobile. Ce serveur stocke le message puis le transmet au destinataire lorsque celui-ci est présent sur le réseau (mobile allumé). Dans cet exemple de réalisation, c'est notamment le serveur (4) qui est capable de mettre le terminal (1) en veille afin de désactiver certaines de ses fonctions pour consommer moins d'énergie. Réciproquement, le serveur (4) est capable d'activer certaines fonctions du terminal. Le serveur de notification peut ainsi transmettre des notifications, qui sont indépendantes d'une session établie entre un terminal client et le serveur d'applications. Par indépendante, on entend que ces notifications ne sont pas acheminées au moyen de la session.

L'invention permet une gestion économique de la session *websocket* établie entre le client et le serveur par l'introduction d'un équipement, ou module (2), que l'on appelle « proxy Web » (en abrégé, PWS, sur la figure 2), et qui va pouvoir se substituer au terminal (1) lorsque la session *websocket* est désactivée et que le terminal devient de ce fait incapable de répondre aux messages *websocket* en provenance du serveur (3). Le module Proxy propose en quelque sorte un canal de communication alternatif (représenté en pointillés sur la figure) à même d'intercepter les messages de la session *websocket* SS_WS et donc, dans ce contexte, de se substituer au terminal.

On va maintenant décrire l'invention plus en détails à l'appui des figures 2 et 3.

La figure 2 représente l'architecture d'un équipement qui implémente un mode de réalisation de l'invention. Le module proxy (2, PWS) peut être situé sur n'importe quel équipement connecté à l'Internet, par exemple selon ce mode de réalisation dans une passerelle domestique (10), un équipement qui permet d'assurer la redirection, ou routage, des paquets de données entre les différents terminaux et réseaux qui lui sont connectés.

La passerelle (10) comprend, classiquement, des mémoires (M) associées à un processeur (CPU). Les mémoires peuvent être de type ROM (de l'anglais *Read Only Memory*) ou RAM (de l'anglais *Random Access Memory*) ou encore Flash. Une partie de la mémoire M contient notamment, selon l'invention, la partie logicielle du dispositif (PWS) de l'invention qui est mise en œuvre au moyen de composants logiciels et/ou matériels. Le terme module peut correspondre aussi bien à un composant logiciel qu'à un composant matériel ou un ensemble de composants matériels et logiciels, un composant logiciel correspondant lui-même à un ou plusieurs programmes ou sous-programmes d'ordinateur ou de manière plus générale à tout élément d'un programme apte à mettre en œuvre une fonction ou un ensemble de fonctions telles que décrites pour les modules concernés. De la même manière, un composant matériel correspond à tout élément d'un ensemble matériel (ou hardware) apte à mettre en œuvre une fonction ou un ensemble de fonctions pour le module concerné (circuit intégré, carte à puce, carte à mémoire, etc.). La passerelle 10 comporte encore un certain nombre de modules qui lui permettent de communiquer avec l'extérieur via différents protocoles sur différents liens physiques ; sur la figure 2 on a ainsi schématisé un module Ethernet permettant des communications filaires avec le réseau internet, un module Wifi et un module Zigbee pour les communications sans fils.

La figure 3 représente les échanges entre le terminal client (1), le module *proxy* (2) selon l'invention, le serveur (3) de *websocket* et le serveur mobile (4).

L'invention peut s'appliquer à tout type de réseau terminal et aussi tout type de liaison entre le terminal et le réseau Internet : le lien physique (C1) entre le terminal 3 et le réseau Internet peut être de type filaire (Ethernet) ou sans fils (Wifi, 3G, 4G, Zigbee). Le réseau hébergeant le terminal peut être un réseau local ou un réseau mobile, ou encore un support radio pour une communication selon le protocole Zigbee (une technologie sans fils radio de basse puissance qui permet d'échanger sur un canal radio des messages conformes au protocole ZigBee basé sur la norme IEEE 802.15.4). Dans le contexte de ce mode de réalisation, il est supposé que le protocole applicatif utilisé pour la communication entre le serveur et le terminal est de type *websocket.* Néanmoins, l'invention n'est pas restreinte aux *websocket* et pourrait s'appliquer au contexte de toute autre session de communication bidirectionnelle entre un serveur et un client.

Pour établir une session, ou connexion, *websocket,* une négociation préalable par échange de messages HTTP est réalisée entre le client (1) et le serveur (3). Cette négociation, aussi appelée *handshake* selon la terminologie anglo-saxonne, permet l'établissement d'une session de communication (SS_WS) pour l'échange de messages applicatifs conformément au protocole *websocket,* entre un client et un serveur du réseau. Les données peuvent subséquemment être envoyées et reçues par les deux points de terminaison que sont dans cet exemple de réalisation le *smartphone* (1) et le serveur (3) à l'aide du protocole *websocket* jusqu'à ce que la connexion, ou session, *websocket* soit fermée. Dans ce mode de réalisation, comme représenté à la figure 3, le proxy (2) reçoit les messages de cette phase initiale. Notamment, lors d'une étape E10, le terminal mobile (1) initie le *handshake* en ajoutant au message standard défini par la norme un paramètre supplémentaire qui indique au *proxy* une demande de session *websocket* optimisée (WSO pour *WebSocket* Optimisé). Alternativement, ce paramètre peut prendre la forme d'une commande, requête, etc, selon le mode d'implémentation retenu. Le message d'ouverture de session envoyé par le terminal comprend ainsi une information indiquant au *proxy* que le terminal est agencé pour recevoir une demande de réouverture de la session sous la forme d'une notification indépendante de la session. Ainsi, seuls les terminaux qui ont besoin de désactiver la session, par exemple dans un but d'économie d'énergie (*smartphones,* etc.), peuvent demander ce mode optimisé, alors que les autres terminaux (ordinateurs, etc.) établissent une session standard.

Par exemple, le champ *Web-Socket-Extensions* (conforme à la spécification RFC 6455 précitée) peut être utilisé pour transmettre cette information. Lors d'un échange de *handshake,* par exemple :
1. le client envoie une trame correspondant au message HS_WS(WSO) ou message HS_WS(WSO, NUM) de la figure 3 :

| |
|---|
| ```
  GET /chat HTTP/1.1
       Host: server.example.com
       Upgrade: websocket
       Connection: Upgrade
       Sec-WebSocket-Key: dGhlIHNhbXBsZSBub25jZQ==
       Origin: http://example.com
       Sec-WebSocket-Protocol: chat, superchat
       Sec-WebSocket-Version: 13
``` |

Puis, selon que le client dispose (HS_WS(WSO)) ou non (HS_WS(WSO, NUM)) du numéro de session reçue au préalable : 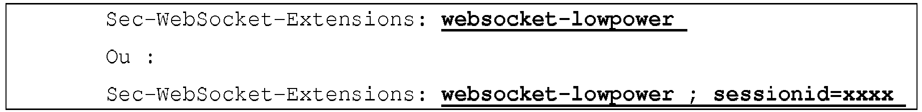
On peut également, selon une variante, ajouter en paramètre une valeur de compteur de temps (correspondant au temps à respecter avant détection d'inactivité, comme il sera discuté par la suite).
2. Le serveur, quant à lui, répond par le message (correspondant au message SS_OK(NUM) dans la figure 3) :

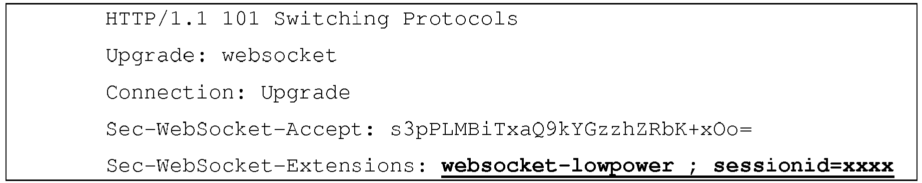

Le module proxy (2) reçoit le message de *Handshake* (HS_WS) au cours d'une étape E1 de gestion de l'établissement de la session de communication. Puis, au cours de cette étape E1, le module proxy retransmet le message de *Handshake* (HS_WS) au serveur Web auquel il était initialement destiné, reçoit la confirmation du serveur (SS_OK) si celui-ci autorise la session, c'est-à-dire si toutes les conditions sont réunies pour qu'il accepte une session *websocket* avec le terminal (1), et retransmet au terminal (1) l'acquittement de la connexion (SS_OK). Un numéro de session (NUM) est également transmis au terminal (1). Il s'agit d'un identifiant unique géré par le module proxy lui permettant de faire le lien entre terminal et serveur. A cet effet, le module proxy maintient par exemple une table comportant, pour chaque numéro de session, l'adresse du terminal et l'adresse correspondante du serveur.

Lors d'une étape E2, le module *proxy* initialise une période de temps (T_timer), par exemple cinq minutes. Selon une variante évoquée ci-dessus, ce paramètre pourrait être retransmis par *Sec-WebSocket-Extensions,* permettant au client de spécifier la durée d'attente avant détection d'inactivité.

Si, à l'issue de cette période de temps, aucun message n'a été détecté en provenance du serveur sur la session *websocket* (SS_WS), la session de communication est déclarée inactive et le *proxy* transmet, au cours d'une étape E3, une commande de fin de session *websocket* au terminal (message : END_SS_WS). Ce type de message est normalisé dans la RFC 6455.

A partir de ce moment, la session *websocket* (SS_WS) est refermée partiellement, entre le terminal et le module proxy. Le lien physique correspondant (radio, mobile, etc.) peut être ou non déconnecté, pour assurer une consommation énergétique moins élevée du terminal. Cette possibilité est offerte par la fermeture de session selon l'invention, mais reste en dehors de l'invention.

Lors d'une étape E4 suivant la fermeture, le module *proxy* prend en charge la session *websocket* (SS_WS), notamment par une écoute (LST) des messages applicatifs échangés sur cette session : tant qu'aucun message n'est détecté, le proxy écoute (LST) et la session reste fermée. Lorsqu'un message d'information *websocket* (MSG_WS) en provenance du serveur est détecté, le procédé envoie vers le serveur de notification (4) un message pour lui demander le réveil de la session (SS_WS) et sort de l'étape E4. Le serveur de notifications réveille la session en envoyant une notification, par exemple en utilisant un message SMS binaire (SMS : WK_UP) lui intimant de réactiver la session *websocket,* avec en paramètre le numéro de la session *websocket* (NUM) qui a été interrompue préalablement. On rappelle ici que la notification est envoyée indépendamment de la session. Le but de cet étape est de transmettre au terminal une information de reconnexion *websocket* au terminal par un moyen (SMS, Zigbee, etc.) si possible peu consommateur d'énergie, afin de conserver le bénéfice de la période d'inactivité.

La notification, par exemple le message, est reçue par le terminal lors d'une étape E13.

Lors d'une étape E14 suivant le réveil de la session, une nouvelle phase de négociation, ou *handshake,* est initiée par le terminal mobile. Cette phase est très similaire à celle de l'étape E10 : le terminal mobile (1) initie le *handshake websocket* en ajoutant au message standard défini par la norme un paramètre supplémentaire pour demander une session *websocket* Optimisée (WSO) et rappelle de plus, à la différence de l'étape E10, le numéro de session (NUM) dans son message (HS_WS (WSO, NUM)). Le *proxy* (2) reçoit ce message au cours d'une étape E5 de gestion du rétablissement de la session de communication et transmet au terminal l'acquittement de la connexion (SS_OK) avec le numéro de session (NUM).

La session étant rétablie, il reste au module *proxy* à retransmettre le message *websocket* reçu préalablement du serveur (MSG_WS) vers le terminal, au cours d'une étape E6.

Ainsi, vu du serveur, tout s'est passé comme si la session ne s'était pas interrompue. Il en va de même pour le terminal, à condition de demander le mode de session optimisé offert par l'invention. Pour le terminal, le procédé est particulièrement avantageux puisqu'il permet de fermer la session pendant les périodes d'inactivité, la fermeture de la session pouvant être suivie, selon des modes de mise en œuvre particuliers, par des fermetures et/ou déconnexions du lien physique qui la porte (par exemple, déconnexion du canal radio ou du lien Ethernet C1, désactivation des modules Ethernet, Wifi, Zigbee, du terminal, etc).

Il va de soi que le mode de réalisation qui a été décrit ci-dessus a été donné à titre purement indicatif et nullement limitatif, et que de nombreuses modifications peuvent être facilement apportées par l'homme de l'art.

Notamment, l'invention peut aussi compléter un dispositif de mise en veille du terminal et permettre un réveil de celui-ci lorsque seulement des inforations du serveur lui sont transmises.

## Revendications

1. Procédé de gestion d'une session de communication applicative (SS_WS) établie entre un terminal (1) et au moins un serveur (3) sur un premier canal de communication, ladite session étant contrôlée par un dispositif de gestion apte à intercepter les messages applicatifs (MSG_WS) échangés sur la session applicative et étant identifiée par un numéro de session (NUM), ledit procédé étant **caractérisé en ce qu'**il comporte les étapes suivantes :
- initialisation (E2) par le dispositif de gestion d'une période de temps (T_timer) ;
- fermeture (E3) de la session de communication (SS_WS) entre le terminal et le dispositif de gestion à l'issue de cette période de temps (T_timer) si aucun message applicatif (MSG_WS) relatif à la session de communication (SS_WS) n'a été reçu par le dispositif de gestion sur le premier canal, et, après la fermeture de la session :
- détection (E4, LST), par le dispositif de gestion, d'au moins un message applicatif (MSG_WS) relatif à la session de communication en provenance du serveur sur le premier canal ;
- envoi, par le dispositif de gestion, d'un message (REQ_WK-UP) de demande de rétablissement (E4) de la session de communication (SS_WS) à un serveur de notification, ledit message comportant l'identifiant de la session (NUM) ;
- transmission au terminal, par ledit serveur de notification, sur un second canal, d'une demande de rétablissement de la session sous la forme d'une notification (SMS : WK_UP(NUM)) comportant l'identifiant de la session,
le premier canal de communication et le second canal de transmission utilisant des technologies de communication différentes.

2. Procédé selon la revendication 1, **caractérisé en ce qu'**il comporte en outre une étape de retransmission (E6) vers le terminal (3) du message (MSG_WS) détecté sur la session de communication (SS_WS).

3. Procédé selon la revendication 1, **caractérisé en ce que** la notification est de type SMS.

4. Procédé selon la revendication 1, **caractérisé en ce que** la session de communication applicative est de type *websocket*(WS)*.*

5. Procédé de gestion selon la revendication 1, dans lequel un message d'ouverture de session envoyée par le terminal sur le premier canal comprend une information indiquant au dispositif de gestion que le terminal est agencé pour recevoir une demande de réouverture de la session sous la forme de ladite notification.

6. Procédé de communication sur un terminal (1) apte à échanger des messages applicatifs avec au moins un serveur (3) via une session de communication applicative (SS_WS) sur un premier canal, ladite session étant contrôlée par un dispositif de gestion apte à intercepter les messages applicatifs (MSG_WS) échangés sur la session et étant identifiée par un numéro de session (NUM), ledit procédé étant **caractérisé en ce qu'**il comporte les étapes suivantes sur le terminal :
- envoi d'un message d'ouverture de la session de communication (E10) sur le premier canal,
- obtention (E11) de l'identifiant de session (NUM) pour la session de communication (SS_WS) ;
- fermeture (E12) de la session (SS_WS) ;
- réception (E13), sur un second canal, d'une demande de réouverture de la session sous la forme d'une notification comportant l'identifiant de session (NUM);
- envoi d'un message (E14) de réouverture de la session de communication (SS_WS) comportant l'identifiant (NUM) de la session ;
le premier canal de communication et le second canal de transmission utilisant des technologies de communication différentes.

7. Procédé de communication selon la revendication 6, dans lequel le message d'ouverture de session applicative envoyé par le terminal comprend une information indiquant au dispositif de gestion que le terminal est agencé pour recevoir une demande de réouverture de la session applicative sous la forme de ladite notification.

8. Terminal (1) apte à échanger des messages applicatifs avec au moins un serveur (3) via une session de communication (SS_WS) applicative sur un premier canal, ladite session étant identifiée par un numéro de session (NUM), ledit terminal comportant :
- un module apte à émettre, sur le premier canal, un message d'ouverture de session de communication (E10) ;
- un module d'obtention de l'identifiant de session (NUM) pour la session de communication (SS_WS) ;
- un module de fermeture de la session (SS_WS) ;
- un module de réception, sur un second canal, d'une demande de réouverture de la session sous la forme d'une notification comportant l'identifiant (NUM) de la session ;
- un module d'envoi, sur le premier canal, d'un message de réouverture de la session de communication (SS_WS) comportant l'identifiant (NUM) de la session ;
le premier canal de communication et le second canal de transmission utilisant des technologies de communication différentes.

9. Système de gestion (2, PWS) d'une session de communication applicative (SS_WS) établie entre un terminal (1) apte à échanger des messages applicatifs (MSG_WS) avec au moins un serveur (3) via la session de communication (SS_WS) sur un premier canal, ledit système comprenant :
- un dispositif de gestion comportant :
- un module d'initialisation d'une période de temps (T_timer) *;*
- un module pour détecter un message applicatif (MSG_WS) relatif à la session de communication (SS_WS) ;
- un module d'envoi d'un message (REQ_WK-UP) de demande de fermeture de la session de communication (SS_WS) entre le terminal et le dispositif de gestion à l'issue de cette période de temps (T_*timer*), si aucun message n'a été détecté ;
- un module pour émettre un message de demande de rétablissement de la session de communication à un serveur de notification, ledit message comportant l'identifiant de la session, ledit module étant activé sur détection d'un message applicatif relatif à la session de communication reçu en provenance du serveur après la fermeture de la session ;
- un serveur de notification comportant :
- un module pour recevoir un message de demande de rétablissement d'une session applicative, ledit message comportant l'identifiant de la session ;
- un module pour émettre un message de demande de rétablissement d'une session applicative sur un second canal, ledit message comportant l'identifiant de la session, vers un terminal.
- au moins un terminal selon la revendication 8;
le premier canal de communication et le second canal de transmission utilisent des technologies de communication différentes.

10. Programme d'ordinateur apte à être mis en œuvre sur un système tel que défini dans la revendication 9, le programme comprenant des instructions de code qui, lorsque le programme est exécuté par un processeur, réalise les étapes du procédé de gestion selon la revendication 1.

11. Programme d'ordinateur apte à être mis en œuvre sur un terminal tel que défini dans la revendication 8, le programme comprenant des instructions de code qui, lorsque le programme est exécuté par un processeur, réalise les étapes du procédé de communication selon la revendication 6.

## Patentansprüche

1. Verfahren zur Verwaltung einer Anwendungskommunikationssitzung (SS_WS), die zwischen einem Endgerät (1) und mindestens einem Server (3) auf einem ersten Kommunikationskanal aufgebaut wird, wobei die Sitzung durch eine Verwaltungsvorrichtung gesteuert wird, die fähig ist, die über die Anwendungssitzung ausgetauschten Anwendungsnachrichten (MSG_WS) abzufangen, und durch eine Sitzungsnummer (NUM) gekennzeichnet ist, wobei das Verfahren **dadurch gekennzeichnet ist, dass** es die folgenden Schritte umfasst:
- Initialisierung (E2) eines Zeitraums (T_timer) durch die Verwaltungsvorrichtung;
- Schließung (E3) der Kommunikationssitzung (SS_WS) zwischen dem Endgerät und der Verwaltungsvorrichtung bei Ende dieses Zeitraums (T_timer), wenn keine Anwendungsnachricht (MSG_WS) zu der Kommunikationssitzung (SS_WS) von der Verwaltungsvorrichtung auf dem ersten Kanal empfangen wurde, und nach Schließung der Sitzung;
- Erkennung (E4, LST) mindestens einer Anwendungsnachricht (MSG_WS) zu der Kommunikationssitzung vom Server auf dem ersten Kanal durch die Verwaltungsvorrichtung;
- Sendung einer Nachricht (REQ_WK-UP) einer Anfrage zum Wiederaufbau (E4) der Kommunikationssitzung (SS_WS) durch die Verwaltungsvorrichtung an einen Meldungsserver, wobei die Nachricht die Sitzungskennung (NUM) umfasst;
- Übermittlung einer Anfrage zum Wiederaufbau der Sitzung an das Endgerät auf einem zweiten Kanal durch den Meldungsserver in Form einer Meldung (SMS: WK_UP(NUM)), die die Sitzungskennung enthält,
wobei der erste Kommunikationskanal und der zweite Übermittlungskanal unterschiedliche Kommunikationstechnologien nutzen.

2. Verfahren nach Anspruch 1, **dadurch gekennzeichnet, dass** es außerdem einen Schritt der Rückübermittlung (E6) der Nachricht (MSG_WS), die zu der Kommunikationssitzung (SS_WS) erkannt wird, an das Endgerät (3) umfasst.

3. Verfahren nach Anspruch 1, **dadurch gekennzeichnet, dass** die Meldung vom Typ SMS ist.

4. Verfahren nach Anspruch 1, **dadurch gekennzeichnet, dass** die Anwendungskommunikationssitzung vom Typ *Websocket* (WS) ist.

5. Verfahren nach Anspruch 1, wobei eine Nachricht über die Eröffnung der Sitzung, die vom Endgerät auf dem ersten Kanal gesendet wird, eine Information umfasst, die der Verwaltungsvorrichtung anzeigt, dass das Endgerät dazu eingerichtet ist, eine Anfrage zur Wiedereröffnung der Sitzung in Form der Meldung zu empfangen.

6. Kommunikationsverfahren auf einem Endgerät (1), das fähig ist, Anwendungsnachrichten über eine Anwendungskommunikationssitzung (SS_WS) mit mindestens einem Server (3) auf einem ersten Kanal auszutauschen, wobei die Sitzung durch eine Verwaltungsvorrichtung gesteuert wird, die fähig ist, die über die Sitzung ausgetauschten Anwendungsnachrichten (MSG_WS) abzufangen, und durch eine Sitzungsnummer (NUM) gekennzeichnet ist, wobei das Verfahren **dadurch gekennzeichnet ist, dass** es die folgenden Schritte umfasst:
- Sendung einer Nachricht zur Eröffnung der Kommunikationssitzung (E10) auf dem ersten Kanal,
- Erhalt (E11) der Sitzungskennung (NUM) für die Kommunikationssitzung (SS_WS);
- Schließung (E12) der Sitzung (SS_WS);
- Empfang (E13) einer Anfrage zur Wiedereröffnung der Sitzung auf einem zweiten Kanal in Form einer Meldung, die die Sitzungskennung (NUM) umfasst;
- Sendung einer Nachricht (E14) der Wiedereröffnung der Kommunikationssitzung (SS_WS), die die Sitzungskennung (NUM) umfasst;
wobei der erste Kommunikationskanal und der zweite Übermittlungskanal unterschiedliche Kommunikationstechnologien nutzen.

7. Kommunikationsverfahren nach Anspruch 6, wobei die Nachricht der Eröffnung der Anwendungssitzung, die vom Endgerät gesendet wird, eine Information umfasst, die der Verwaltungsvorrichtung anzeigt, dass das Endgerät dazu eingerichtet ist, eine Anfrage zur Wiedereröffnung der Sitzung in Form der Meldung zu empfangen.

8. Endgerät (1), das fähig ist, Anwendungsnachrichten über eine Anwendungskommunikationssitzung (SS_WS) auf einem ersten Kanal mit mindestens einem Server (3) auszutauschen, wobei die Sitzung durch eine Sitzungsnummer (NUM) gekennzeichnet ist, wobei das Endgerät umfasst:
- ein Modul, das fähig ist, auf dem ersten Kanal eine Nachricht der Eröffnung der Kommunikationssitzung auszugeben (E10);
- ein Modul zum Erhalt der Sitzungskennung (NUM) für die Kommunikationssitzung (SS_WS);
- ein Modul zur Schließung der Sitzung (SS_WS);
- ein Modul zum Empfang einer Anfrage zur Wiedereröffnung der Sitzung auf einem zweiten Kanal in Form einer Meldung, die die Sitzungskennung (NUM) umfasst;
- ein Modul zur Sendung einer Nachricht der Wiedereröffnung der Kommunikationssitzung (SS_WS), die die Sitzungskennung (NUM) umfasst, auf dem ersten Kanal; wobei der erste Kommunikationskanal und der zweite Übermittlungskanal unterschiedliche Kommunikationstechnologien nutzen.

9. System zur Verwaltung (2, PWS) einer Anwendungskommunikationssitzung (SS_WS), die zwischen einem Endgerät (1), das fähig ist, Anwendungsnachrichten (MSG_WS) mit mindestens einem Server (3) über die Kommunikationssitzung (SS_WS) auf dem ersten Kanal auszutauschen, aufgebaut wird, wobei das System umfasst:
- eine Verwaltungsvorrichtung, umfassend:
- ein Modul zur Initialisierung eines Zeitraums (T_timer) *;*
- ein Modul zur Erkennung einer Anwendungsnachricht (MSG_WS) zu der Kommunikationssitzung (SS_WS);
- ein Modul zur Sendung einer Nachricht (REQ_WK-UP) einer Anfrage zur Schließung der Kommunikationssitzung (SS_WS) zwischen dem Endgerät und der Verwaltungsvorrichtung am Ende dieses Zeitraums (T_timer), wenn keine Nachricht erkannt wurde;
- ein Modul zur Ausgabe einer Nachricht der Anfrage zum Wiederaufbau der Kommunikationssitzung an einen Meldungsserver, wobei die Nachricht die Sitzungskennung enthält, wobei das Modul bei Erkennung einer Anwendungsnachricht zu der Kommunikationssitzung, die nach Schließung der Sitzung vom Server empfangen wird, aktiviert wird;
- einen Meldungsserver, umfassend:
- ein Modul zum Empfang einer Nachricht der Anfrage zum Wiederaufbau einer Anwendungssitzung, wobei die Nachricht die Sitzungskennung umfasst;
- ein Modul zur Ausgabe einer Nachricht der Anfrage zum Wiederaufbau einer Anwendungssitzung auf einem zweiten Kanal an ein Endgerät, wobei die Nachricht die Sitzungskennung umfasst;
- mindestens ein Endgerät nach Anspruch 8;
wobei der erste Kommunikationskanal und der zweite Übermittlungskanal unterschiedliche Kommunikationstechnologien nutzen.

10. Computerprogramm, das fähig ist, auf einem System nach Anspruch 9 umgesetzt zu werden, wobei das Programm Anweisungen eines Codes umfasst, der bei Ausführung des Programms durch einen Prozessor die Schritte des Verwaltungsverfahrens nach Anspruch 1 durchführt.

11. Computerprogramm, das fähig ist, auf einem System nach Anspruch 8 umgesetzt zu werden, wobei das Programm Anweisungen eines Codes umfasst, der bei Ausführung des Programms durch einen Prozessor die Schritte des Verwaltungsverfahrens nach Anspruch 6 durchführt.

## Claims

1. Method for managing an application communication session (SS_WS) set up between a terminal (1) and at least one server (3) over a first communication channel, said session being controlled by a management device that is capable of intercepting the application messages (MSG_WS) exchanged in the application session and being identified by a session number (NUM), said method being **characterized in that** it includes the following steps:
- initialization (E2) of a period of time (T_timer) by the management device;
- closure (E3) of the communication session (SS_WS) between the terminal and the management device at the end of this period of time (T_timer) if no application message (MSG_WS) relating to the communication session (SS_WS) has been received by the management device over the first channel, and, after the closure of the session:
- detection (E4, LST), by the management device, of at least one application message (MSG_WS) relating to the communication session from the server over the first channel;
- sending, by the management device, of a message (REQ_WK-UP) requesting that the communication session (SS_WS) be restored (E4) to a notification server, said message including the identifier (NUM) of the session;
- transmission to the terminal, by said notification server, over a second channel, of a request to restore the session in the form of a notification (SMS: WK_UP(NUM)) including the identifier of the session,
the first communication channel and the second transmission channel using different communication technologies.

2. Method according to Claim 1, **characterized in that** it further includes a step (E6) of retransmission to the terminal (3) of the message (MSG_WS) detected in the communication session (SS_WS).

3. Method according to Claim 1, **characterized in that** the notification is of SMS type.

4. Method according to Claim 1, **characterized in that** the application communication session is of *WebSocket* (WS) type.

5. Management method according to Claim 1, wherein a session opening message sent by the terminal over the first channel comprises an item of information indicating to the management device that the terminal is designed to receive a request to reopen the session in the form of said notification.

6. Method for communication on a terminal (1) capable of exchanging application messages with at least one server (3) via an application communication session (SS_WS) over a first channel, said session being controlled by a management device that is capable of intercepting the application messages (MSG_WS) exchanged in the session and being identified by a session number (NUM), said method being **characterized in that** it includes the following steps on the terminal:
- sending (E10) of an opening message for the communication session over the first channel;
- obtention (E11) of the session identifier (NUM) for the communication session (SS_WS);
- closure (E12) of the session (SS_WS);
- reception (E13), over a second channel, of a request to reopen the session in the form of a notification including the session identifier (NUM);
- sending (E14) of a reopening message for the communication session (SS_WS), which includes the identifier (NUM) of the session;
the first communication channel and the second transmission channel using different communication technologies.

7. Communication method according to Claim 6, wherein the application session opening message sent by the terminal comprises an item of information indicating to the management device that the terminal is designed to receive a request to reopen the application session in the form of said notification.

8. Terminal (1) capable of exchanging application messages with at least one server (3) via an application communication session (SS_WS) over a first channel, said session being identified by a session number (NUM), said terminal including:
- a module capable of transmitting (E10), over the first channel, a communication session opening message;
- a module for obtaining the session identifier (NUM) for the communication session (SS_WS);
- a module for closing the session (SS_WS);
- a module for receiving, over a second channel, a request to reopen the session in the form of a notification including the identifier (NUM) of the session;
- a module for sending, over the first channel, a reopening message for the communication session (SS_WS), which includes the identifier (NUM) of the session;
the first communication channel and the second transmission channel using different communication technologies.

9. System (2, PWS) for managing an application communication session (SS_WS) set up between a terminal (1) capable of exchanging application messages (MSG_WS) with at least one server (3) via the communication session (SS_WS) over a first channel, said system comprising:
- a management device including:
- a module for initializing a period of time (T_timer) *;*
- a module for detecting an application message (MSG_WS) relating to the communication session (SS_WS);
- a module for sending a message (REQ_WK-UP) requesting that the communication session (SS_WS) between the terminal and the management device be closed at the end of this period of time *(T_timer),* if no message has been detected;
- a module for sending a message requesting that the communication session be restored to a notification server, said message including the identifier of the session, said module being activated on detection of an application message relating to the communication session received from the server after the closure of the session;
- a notification server including:
- a module for receiving a message requesting that an application session be restored, said message including the identifier of the session;
- a module for transmitting a message requesting that an application session be restored over a second channel, said message including the identifier of the session, to a terminal;
- at least one terminal according to Claim 8;
the first communication channel and the second transmission channel using different communication technologies.

10. Computer program capable of being implemented on a system as defined in Claim 9, the program comprising code instructions which, when the program is executed by a processor, carry out the steps of the management method according to Claim 1.

11. Computer program capable of being implemented on a terminal as defined in Claim 8, the program comprising code instructions which, when the program is executed by a processor, carry out the steps of the communication method according to Claim 6.
